# FASCICULE DE BREVET EUROPEEN

(11) **EP 1 328 181 B1**
(45) Date de publication et mention de la délivrance du brevet: **04.05.2005**
(21) Numéro de dépôt: 01965338.5
(22) Date de dépôt: 21.08.2001
(51) Int. Cl.: A47J 37/08

(54) **GRILLE-PAIN A DISPOSITIF DE RETENUE ELECTROMAGNETIQUE**
TOASTER MIT ELEKTROMAGNETISCHER HALTEVORRICHTUNG
TOASTER WITH ELECTROMAGNETIC RETAINING DEVICE

(30) Priorité: 25.08.2000 FR 0010975
(43) Date de publication de la demande: 23.07.2003
(73) Titulaire: SEB S.A., 69130 Ecully (FR)
(72) Inventeur: ARNEDO, Julian, 08031 BARCELONA (ES); BASORA SANJUAN, Antonio, 08028 BARCELONA (ES)
(74) Mandataire: Kiehl, Hubert
(86) Numéro de dépôt international: PCT/FR2001/002648
(87) Numéro de publication internationale: WO 2002/015760

(56) Documents cités:
- DE-A- 2 632 500

## Description

La présente invention concerne un grille-pain comprenant un boîtier renfermant des moyens de chauffage, un chariot porte-pain mobile entre une position d'éjection en laquelle il est rappelé par un moyen élastique et une position de grillage en laquelle il est retenu par un dispositif électromagnétique. Ce dernier comprend, d'une part, une pièce ferromagnétique fixée au chariot porte-pain, et d'autre part, un électroaimant fixé au boîtier. Des moyens de commande agissent sur le circuit d'alimentation de la bobine dudit électroaimant pour retenir le chariot porte-pain pendant l'opération de, grillage. Un tel grille-pain est décrit dans le document DE-A-2 632 500.

Dans les grille-pain de ce type la bobine de l'électroaimant est alimentée en courant pendant l'opération de grillage pour maintenir le chariot porte-pain en position basse. A la fin de l'opération de grillage, l'alimentation en courant est coupée, et le chariot porte-pain remonte en position d'éjection sous l'action d'un ressort.

Ces dispositifs de retenue électromagnétique peuvent présenter des problèmes pour la remontée du chariot porte-pain à la fin de l'opération de grillage. En effet, la pièce ferromagnétique du chariot porte-pain conserve une certaine aimantation lorsque l'on interrompt le courant dans la bobine de l'électroaimant. Cette aimantation, appelée aimantation rémanente, peut être suffisamment importante pour empêcher la remontée du chariot porte-pain à la fin de l'opération de grillage.

Pour éviter ce problème, il est connu d'employer des matériaux de grande qualité ferromagnétique qui présentent une faible aimantation rémanente, mais ces matériaux sont plus coûteux.

Ce problème est d'autant plus important quand on cherche à obtenir un dispositif de retenue électromagnétique de taille réduite. En effet, pour compenser la diminution de la force d'accrochage d'une pièce ferromagnétique de petite dimension on augmente son aimantation, mais cela entraîne une aimantation rémanente plus importante.

L'invention vise à remédier à ces inconvénients et à réaliser un dispositif de retenue électromagnétique peu coûteux et de taille réduite.

Selon l'invention les moyens de commande du grill-pain sont adaptés à agir sur des moyens d'interruption du circuit d'alimentation de la bobine de manière à appliquer une tension positive aux bornes de la bobine pendant l'opération de grillage, puis une tension négative de valeur absolue inférieure à la fin de l'opération de grillage.

Grâce à cette disposition, la bobine de l'électroaimant crée un champ magnétique plus faible mais de sens opposé à celui créé pendant l'opération de grillage. Cela contrecarre l'aimantation rémanente de la pièce ferromagnétique. Ainsi la force d'accrochage de la pièce ferromagnétique est plus faible et on obtient de manière sûre un retour du chariot porte-pain en position d'éjection à la fin de l'opération de grillage.

D'autres caractéristiques et avantages de l'invention ressortiront de la description qui va suivre, donnée à titre d'exemple non limitatif, en référence aux dessins annexés dans lesquels:
- la figure 1 est une vue en coupe d'un grille-pain comprenant un dispositif de retenue électromagnétique ;
- la figure 2 est un schéma d'un premier mode de réalisation d'un circuit d'alimentation du dispositif de retenue électromagnétique ;
- la figure 3 est un schéma d'un deuxième mode de réalisation d'un circuit d'alimentation du dispositif de retenue électromagnétique ;
- la figure 4 est un schéma d'un troisième mode de réalisation d'un circuit d'alimentation du dispositif de retenue électromagnétique.

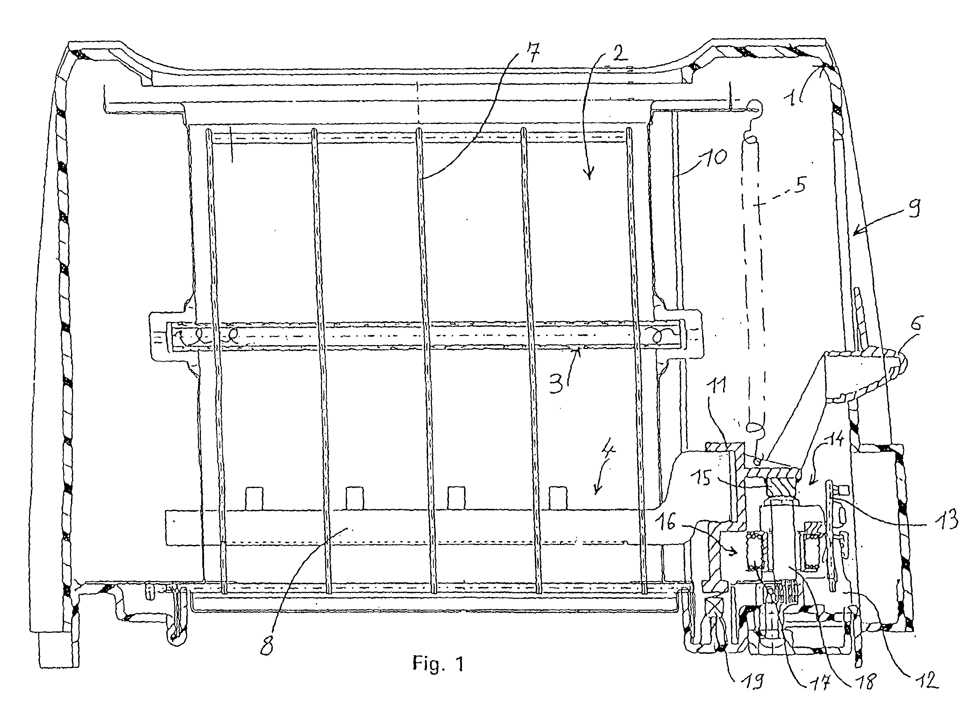

Comme représenté à la figure 1, le grille-pain comporte un boîtier 1 avec une enceinte de grillage 2 ouverte dans sa partie supérieure pour permettre l'introduction d'un aliment tel qu'une tranche de pain. Cette enceinte de grillage est délimitée dans sa partie inférieure par un chariot porte-pain 4 et latéralement par deux grilles verticales 7 disposées symétriquement par rapport au plan médian vertical du boîtier 1.
Le boîtier comporte des moyens de chauffage 3 situés à proximité de l'enceinte de grillage. Ces moyens de chauffage peuvent être réalisés par deux tubes chauffants à quartz disposés horizontalement le long des grilles 7.
Le chariot porte-pain 4 comprend une traverse horizontale 8, prolongée par un entraîneur 11 et une poignée 6 sortant du boîtier 1 par une ouverture verticale 9. Le chariot porte-pain est monté mobile verticalement entre une position haute dite d'éjection et une position basse, dite de grillage, correspondant à la situation de la figure 1. Le mouvement vertical du chariot 4 peut être guidé par une glissière 10.
Un moyen de rappel élastique 5, tel qu'un ressort, maintient le chariot porte-pain 4 en position d'éjection et permet à un utilisateur d'abaisser le chariot en position de grillage en exerçant une pression sur la poignée 6.

En position de grillage le chariot 4 est retenu par un dispositif électromagnétique 14 qui comprend, d'une part, une pièce ferromagnétique 15 fixée au chariot porte-pain, et d'autre part, un électroaimant 16 fixé au boîtier 1 du grille-pain. Cet électroaimant 16 comporte de manière bien connue, une bobine électrique 17 reliée à un circuit d'alimentation et un noyau ferromagnétique 18 qui permet d'intensifier le champ magnétique créé par la bobine 17.
Le boîtier comporte des moyens de commande qui agissent sur les moyens de chauffage 3 et sur le circuit d'alimentation de la bobine 17 pour retenir le chariot porte-pain 4 pendant l'opération de grillage. Les moyens de commande et le circuit d'alimentation de la bobine sont réalisés sur un circuit imprimé 13 monté sur un support 12 à proximité de l'électroaimant 16.
Un contacteur de fin de course 19 est relié aux moyens de commande pour détecter l'abaissement du chariot porte-pain 4 en position de grillage. Les moyens de commande comprennent des moyens permettant de déterminer la fin de l'opération de grillage. Il peut s'agir d'un compteur de temps ou d'un capteur relatif à l'état de brunissement du pain.

Selon l'invention les moyens de commande agissent sur des moyens d'interruption du circuit d'alimentation de la bobine 17 de manière à appliquer une tension positive aux bornes de la bobine pendant l'opération de grillage, puis une tension négative de valeur absolue inférieure à la fin de l'opération de grillage. De manière préférentielle la tension d'alimentation de la bobine pendant l'opération de grillage est comprise entre 12V et 15V, puis entre -1,2V et -0,5V à la fin de l'opération de grillage.
Ainsi l'électroaimant 16 crée à la fin de l'opération de grillage un champs magnétique de direction inversée et d'intensité plus faible qui diminue l'aimantation rémanente de la pièce ferromagnétique 15 fixée au chariot porte-pain 4. Grâce à cette disposition on peut utiliser une pièce ferromagnétique de qualité inférieure, par exemple on peut utiliser une tôle de qualité ferromagnétique V600-65A au lieu de V350-50A. Cette disposition permet aussi d'utiliser une pièce ferromagnétique de petites dimensions. Avec une pièce ferromagnétique d'une surface de 64 mm2, l'aimantation rémanente peut exercer un force d'accrochage de 500g qui empêche le retour du chariot porte-pain. L'invention permet de limiter cette force d'accrochage à environ 25g.

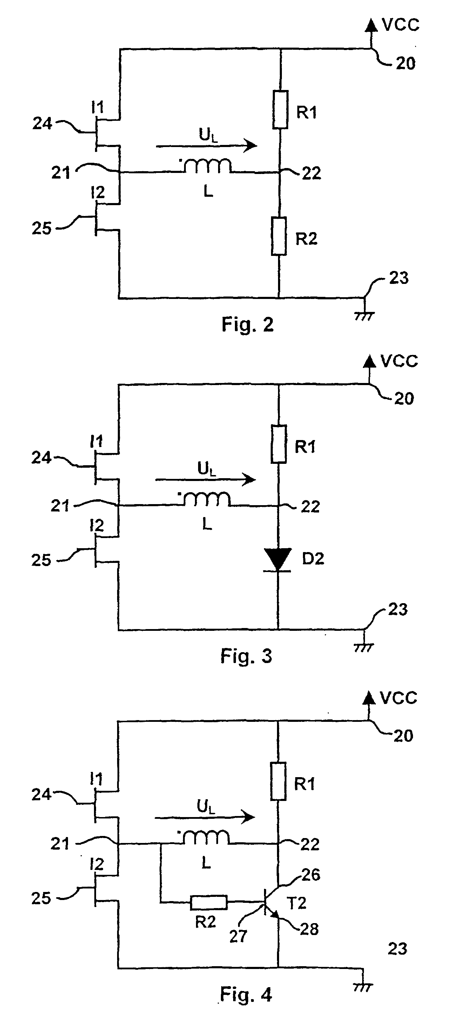

La figure 2 représente une premier mode de réalisation, selon l'invention, du circuit d'alimentation de la bobine 17 représentée schématiquement par la référence L.
Ce circuit comprend une borne d'alimentation en courant continu 20, un premier moyen d'interruption I1 entre la borne d'alimentation 20 et l'entrée 21 de la bobine L, un second moyen d'interruption 12 entre l'entrée 21 de la bobine et la masse 23, une première résistance R1 entre la borne d'alimentation 20 et la sortie 22 de la bobine, une seconde résistance R2, inférieure à la première résistance R1, entre la sortie 22 de la bobine et la masse 23. Les moyens de commande sont adaptés à maintenir le premier moyen d'interruption I1 fermé et le second moyen d'interruption I2 ouvert pendant l'opération de grillage. A la fin de l'opération de grillage les moyens de commande sont adaptés à ouvrir le premier moyen d'interruption I1 et à fermer le second moyen d'interruption I2.
L'alimentation en courant continu 20 est obtenue à partir du courant alternatif du secteur à l'aide d'un dispositif transformateur et redresseur, sa tension VCC est de 15V.

Les résistances R1 et R2 sont calculées de manière à obtenir une tension U_{L} entre l'entrée 21 et la sortie 22 de la bobine L de l'ordre de 12V pendant l'opération de grillage, puis une tension U_{L} de l'ordre de -0,5V à la fin de l'opération de grillage. Cela implique que la valeur de la première résistance R1 est très supérieure à celle de la seconde résistance R2.
Les moyens d'interruption (I1,I2) sont réalisés à l'aide de transistors à effet de champ (FET) dont les portes (24,25) sont reliées aux moyens de commande. Pour fermer un moyen d'interruption (I1,I2) ainsi réalisé, les moyens de commande envoient un courant de faible intensité à la porte (24,25) du transistor à effet de champ.

Nous allons maintenant décrire le déroulement d'un cycle de grillage.
L'utilisateur abaisse le chariot porte-pain 4 en position de grillage, le contacteur de fin de course 19 permet aux moyens de commande de détecter le début de l'opération de grillage. Les moyens de commande ferment alors le premier moyen d'interruption I1 et ouvrent le second 12. Le courant circule de la borne d'alimentation en courant continu 20 vers l'entrée 21 de la bobine et traverse la seconde résistance R2 pour rejoindre la masse 23. La tension U_{L} aux bornes de la bobine de l'électroaimant est de 12V. La pièce ferromagnétique 15 est aimantée par l'électroaimant 16 et maintient le chariot porte-pain 4 en position de grillage. La durée de l'opération de grillage est déterminée par les moyens de commande à l'aide d'un compteur de temps ou d'un capteur de brunissage.
A la fin de l'opération de grillage les moyens de commande ouvrent le premier moyen d'interruption I1 et ferment le second I2. Le courant passe alors à travers la première résistance R1 jusqu'à la sortie 22 de la bobine, d'où il circule en parallèle à travers la bobine L et la seconde résistance R2. La tension U_{L} entre l'entrée et la sortie de la bobine est de -0,5 V. Le champ magnétique crée par l'électroaimant 16 est inférieur et de sens opposé à celui créé pendant l'opération de grillage et diminue l'aimantation de la pièce ferromagnétique 15. Le chariot porte-pain 4 remonte sous l'effet de traction du moyen de rappel élastique 5.

La figure 3 représente un deuxième mode de réalisation avantageux du circuit d'alimentation de la bobine 17 représentée schématiquement par la référence L. On a gardé les mêmes références pour plus de clarté.
Ce circuit comprend une borne d'alimentation en courant continu 20, un premier moyen d'interruption I1 entre la borne d'alimentation 20 et l'entrée 21 de la bobine L, un second moyen d'interruption I2 entre l'entrée 21 de la bobine et la masse 23, une première résistance R1 entre la borne d'alimentation 20 et la sortie 22 de la bobine, une diode D2 laissant passer le courant de la sortie 22 de la bobine vers la masse 23. Les moyens de commande sont adaptés à maintenir le premier moyen d'interruption I1 fermé et le second moyen d'interruption I2 ouvert pendant l'opération de grillage. A la fin de l'opération de grillage les moyens de commande sont adaptés à ouvrir le premier moyen d'interruption I1 et à fermer le second moyen d'interruption I2.
L'alimentation en courant continu 20 et les moyens d'interruption (I1,I2) sont identiques à ceux du premier mode de réalisation.
Pour la diode D2 on choisi une diode avec une tension de conduction comprise entre 0,5 V et 0,8V, par exemple une diode à jonction au silicium qui a une tension de conduction de 0,6V.

La valeur de la première résistance R1 est calculée de manière à limiter l'intensité du courant qui traverse la diode D2 à la fin de l'opération de grillage.

La tension de conduction aux bornes de la diode D2 est à peu près constante quelque soit le courant qui la traverse. Cette tension de conduction correspond à celle appliquée à la bobine quand le premier moyen d'interruption I1 est ouvert et le second I2 est fermé. Donc pour obtenir une tension U_{L} comprise entre -0,5V et -0,8V il suffit de choisir une diode dont la tension de conduction est comprise entre ces 0,5V et 0,8V. Grâce à ce montage la tension U_{L} est obtenue de manière directe et sûre. De plus la tension U_{L} est plus grande pendant l'opération de grillage, 14,4V au lieu de 12V, ce qui augmente la force d'accrochage de la pièce ferromagnétique 15.

Le déroulement de l'opération de grillage est analogue à celui précédemment décrit.

La figure 4 représente un troisième mode de réalisation préférentiel du circuit d'alimentation de la bobine 17. Par souci de simplification on conservé les même références pour les éléments communs aux modes de réalisation précédents.
Ce circuit d'alimentation de la bobine 17 comprend un premier moyen d'interruption I1 entre une borne d'alimentation en courant continu 20 et l'entrée 21 de la bobine représentée schématiquement par la référence L, un second moyen d'interruption I2 entre l'entrée 21 de la bobine et la masse 23, une résistance R1 entre la borne d'alimentation en courant continu 20 et la sortie 22 de la bobine, un transistor T2 dont le collecteur 26 est connecté à la sortie 22 de la bobine, la base 27 est connectée à l'entrée 21 de la bobine et l'émetteur 28 est connecté la masse 23, tandis que les moyens de commande sont adaptés à maintenir le premier moyen d'interruption I1 fermé et le second moyen d'interruption I2 ouvert pendant l'opération de grillage, puis à ouvrir le premier moyen d'interruption Il et fermer le second moyen d'interruption I2 à la fin de l'opération de grillage.
L'alimentation en courant continu 20 et les moyens d'interruption (I1,I2) sont identiques à ceux des précédents modes de réalisation.

Le transistor est de préférence un transistor de type NPN. Par ailleurs, il est préférable de disposer une résistance R2 entre l'entrée 21 de la bobine et la base 27 du transistor T2 pour limiter le courant de commande et éviter la destruction du transistor.

Pendant l'opération de grillage, le premier moyen d'interruption I1, constitué par un transistor à effet de champ, est fermé et la tension à l'entrée 21 de la bobine est proche de la tension d'alimentation VCC, c'est à dire 14,8 V pour une tension d'alimentation VCC de 15 V. Un courant suffisamment important circule dans la base 27 du transistor T2 pour saturer celui-ci. La chute de tension entre le collecteur 26 et l'émetteur 28 du transistor est quasiment nulle et on obtient une tension U_{L} au borne de la bobine proche de la tension d'alimentation VCC, soit dans le cas présent une tension U_{L} de 14,6 V qui crée une bonne force d'attraction. A la fin de l'opération de grillage, le deuxième moyen d'interruption I2 est fermé et la tension à la base 27 du transistor T2 est quasiment nulle. Le transistor T2 n'étant plus conducteur, le courant traverse la résistance R1 et circule dans la bobine L de la sortie 22 vers l'entrée 21 et on obtient une tension U_{L} négative qui permet de créer une force de répulsion de la pièce ferromagnétique liée au chariot porte-pain. Ce mode de réalisation du circuit d'alimentation de la bobine est particulièrement avantageux car on peut ajuster la tension U_{L} négative à la fin de l'opération de grillage en modifiant la valeur de la résistance R1, tout en conservant une tension U_{L} proche de la tension d'alimentation VCC pendant l'opération de grillage. Dans ce mode de réalisation préférentiel, la valeur de la résistance R1 est calculée de manière à obtenir une tension U_{L} de -1,2 V à la fin de l'opération de grillage.

L'invention, selon les trois modes de réalisation décrits, permet de garantir une remontée du chariot porte-pain, même en employant une pièce ferromagnétique de qualité ordinaire et de petite dimension.

## Revendications

1. Grille-pain comprenant un boîtier (1) renfermant des moyens de chauffage (3), un chariot porte-pain (4) mobile entre une position d'éjection en laquelle il est rappelé par un moyen élastique (5) et une position de grillage en laquelle il est retenu par un dispositif électromagnétique (14), ledit dispositif électromagnétique comprenant, d'une part, une pièce ferromagnétique (15) fixé au chariot porte-pain (4), et d'autre part, un électroaimant (16) fixé au boîtier, ainsi que des moyens de commande agissant sur le circuit d'alimentation de la bobine (17) dudit électroaimant,
**caractérisé en ce que** les moyens de commande sont adaptés à agir sur des moyens d'interruption (I1,I2) du circuit d'alimentation de la bobine (17) de manière à appliquer une tension (U_{L}) positive aux bornes de la bobine pendant l'opération de grillage, puis une tension négative de valeur absolue inférieure à la fin de l'opération de grillage.

2. Grille-pain selon la revendication 1,
**caractérisé en ce que** le circuit d'alimentation de la bobine (17) comprend un premier moyen d'interruption (I1) agencé entre une borne d'alimentation en courant continu (20) et l'entrée (21) de la bobine (L), un second moyen d'interruption (I2) entre l'entrée (21) de la bobine et la masse (23), une première résistance (R1) entre la borne d'alimentation en courant continu (20) et la sortie (22) de la bobine, une seconde résistance (R2) entre la sortie (22) de la bobine et la masse (23), tandis que les moyens de commande sont adaptés à maintenir le premier moyen d'interruption (I1) fermé et le second moyen d'interruption (12) ouvert pendant l'opération de grillage, puis à ouvrir le premier moyen d'interruption (I1) et fermer le second moyen d'interruption (I2) à la fin de l'opération de grillage.

3. Grille-pain selon la revendication 2,
**caractérisé en ce que** la tension U_{L} appliquée au bornes de la bobine (L) est d'environ 12 V pendant l'opération de grillage, puis d'environ -0,5 V à la fin de l'opération de grillage.

4. Grille-pain selon la revendication 2 ou 3,
**caractérisé en ce que** la valeur de la première résistance (R1) est très supérieure à celle de la seconde résistance (R2).

5. Grille-pain selon la revendication 1,
**caractérisé en ce que** le circuit d'alimentation de la bobine (17) comprend un premier moyen d'interruption (I1) entre une borne d'alimentation en courant continu (20) et l'entrée (21) de la bobine (L), un second moyen d'interruption (I2) entre l'entrée (21) de la bobine et la masse (23), une résistance (R1) entre la borne d'alimentation en courant continu (20) et la sortie (22) de la bobine, une diode (D2) laissant passer le courant de la sortie (22) de la bobine vers la masse (23), tandis que les moyens de commande sont adaptés à maintenir le premier moyen d'interruption (I1) fermé et le second moyen d'interruption (I2) ouvert pendant l'opération de grillage, puis à ouvrir le premier moyen d'interruption (I1) et fermer le second moyen d'interruption (I2) à la fin de l'opération de grillage.

6. Grille-pain selon la revendication 5,
**caractérisé en ce que** la diode (D2) à une tension de conduction de 0,6 V.

7. Grille-pain selon la revendication 1,
**caractérisé en ce que** le circuit d'alimentation de la bobine (17) comprend un premier moyen d'interruption (I1) entre une borne d'alimentation en courant continu (20) et l'entrée (21) de la bobine (L), un second moyen d'interruption (I2) entre l'entrée (21) de la bobine et la masse (23), une résistance (R1) entre la borne d'alimentation en courant continu (20) et la sortie (22) de la bobine, un transistor (T2) dont le collecteur (26) est connecté à la sortie (22) de la bobine, la base (27) est connectée à l'entrée (21) de la bobine et l'émetteur (28) est connecté la masse (23), tandis que les moyens de commande sont adaptés à maintenir le premier moyen d'interruption (I1) fermé et le second moyen d'interruption (I2) ouvert pendant l'opération de grillage, puis à ouvrir le premier moyen d'interruption (I1) et fermer le second moyen d'interruption (I2) à la fin de l'opération de grillage.

8. Grille-pain selon la revendication 7,
**caractérisé en ce que** le transistor (T2) est de type NPN.

9. Grille-pain selon la revendication 7 ou 8,
**caractérisé en ce que** la valeur de la résistance (R1) est calculée de manière à obtenir une tension U_{L} de -1,2 V à la fin de l'opération de grillage.

10. Grille-pain l'une quelconque des revendications 1 à 9,
**caractérisé en ce que** les moyens d'interruption (I1, I2) du circuit d'alimentation de la bobine sont réalisés à l'aide de transistors à effet de champs dont les portes (24,25) sont reliées aux moyens de commande.

## Patentansprüche

1. Toaster mit einem Gehäuse (1), das Heizmittel (3) enthält, einen Brothalterschlitten (4), der zwischen einer Auswerfposition, in die er durch ein elastisches Mittel (5) zurückgestellt wird, und einer Röstposition, in der er durch eine elektromagnetische Vorrichtung (14) gehalten ist, bewegbar ist, wobei die elektromagnetische Vorrichtung zum einen ein am Brothalterschlitten (4) befestigtes ferromagnetisches Teil (15) und zum anderen einen am Gehäuse befestigten Elektromagneten (16) aufweist, und Steuermittel, die auf den Speiseströmkreis der Spule (17) des Elektromagneten wirken, **dadurch gekennzeichnet, dass** die Steuermittel dazu geeignet sind, auf Mittel (I1, I2) zur Unterbrechung des Speisestromkreises der Spule (17) so zu wirken, dass während des Röstvorgangs eine positive Spannung (U_{L}) an die Anschlüsse der Spule und dann am Ende des Röstvorgangs eine negative Spannung mit einem niedrigeren Absolutwert angelegt wird.

2. Toaster nach Anspruch 1, **dadurch gekennzeichnet, dass** der Speisestromkreis der Spule (17) ein erstes Unterbrechungsmittel (I1) aufweist, das zwischen einem Anschluss (20) zur Versorgung mit Gleichstrom und dem Eingang (21) der Spule (L) angebracht ist, ein zweites Unterbrechungsmittel (12) zwischen dem Eingang (21) der Spule und der Masse (23), einen ersten Widerstand (R1) zwischen dem Anschluss (20) zur Versorgung mit Gleichstrom und dem Ausgang (22) der Spule sowie einen zweiten Widerstand (R2) zwischen dem Ausgang (22) der Spule und der Masse (23), während die Steuermittel dazu geeignet sind, während des Röstvorgangs das erste Unterbrechungsmittel (I1) geschlossen und das zweite Unterbrechungsmittel (I2) geöffnet zu halten und dann am Ende des Röstvorgangs das erste Unterbrechungsmittel (I1) zu öffnen und das zweite Unterbrechungsmittel (I2) zu schließen.

3. Toaster nach Anspruch 2, **dadurch gekennzeichnet, dass** die an die Anschlüsse der Spule (L) angelegte Spannung U_{L} während des Röstvorgangs etwa 12 V und dann am Ende des Röstvorgangs etwa -0,5 V beträgt.

4. Toaster nach Anspruch 2 oder 3, **dadurch gekennzeichnet, dass** der Wert des ersten Widerstands (R1) viel größer ist als der des zweiten Widerstands (R2).

5. Toaster nach Anspruch 1, **dadurch gekennzeichnet, dass** der Speisestromkreis der Spule (17) ein erstes Unterbrechungsmittel (I1) zwischen einem Anschluss (20) zur Versorgung mit Gleichstrom und dem Eingang (21) der Spule (L) aufweist, ein zweites Unterbrechungsmittel (I2) zwischen dem Eingang (21) der Spule und der Masse (23), einen Widerstand (R1) zwischen dem Anschluss (20) zur Versorgung mit Gleichstrom und dem Ausgang (22) der Spule sowie eine Diode (D2), die den Strom vom Ausgang (22) der Spule zur Masse (23) fließen lässt, während die Steuermittel dazu geeignet sind, während des Röstvorgangs das erste Unterbrechungsmittel (I1) geschlossen und das zweite Unterbrechungsmittel (I2) geöffnet zu halten und dann am Ende des Röstvorgangs das erste Unterbrechungsmittel (I1) zu öffnen und das zweite Unterbrechungsmittel (I2) zu schließen.

6. Toaster nach Anspruch 5, **dadurch gekennzeichnet, dass** die Diode (D2) eine Leitungsspannung von 0,6 V besitzt.

7. Toaster nach Anspruch 1, **dadurch gekennzeichnet, dass** der Speisestromkreis der Spule (17) ein erstes Unterbrechungsmittel (I1) zwischen einem Anschluss (20) zur Versorgung mit Gleichstrom und dem Eingang (21) der Spule (L) aufweist, ein zweites Unterbrechungsmittel (I2) zwischen dem Eingang (21) der Spule und der Masse (23), einen Widerstand (R1) zwischen dem Anschluss (20) zur Versorgung mit Gleichstrom und dem Ausgang (22) der Spule sowie einen Transistor (T2), dessen Kollektor (26) mit dem Ausgang (22) der Spule, die Basis (27) mit dem Eingang (21) der Spule und der Emitter (28) mit der Masse (23) verbunden ist, während die Steuermittel dazu geeignet sind, während des Röstvorgangs das erste Unterbrechungsmittel (I1) geschlossen und das zweite Unterbrechungsmittel (12) geöffnet zu halten und dann am Ende des Röstvorgangs das erste Unterbrechungsmittel (I1) zu öffnen und das zweite Unterbrechungsmittel (I2) zu schließen.

8. Toaster nach Anspruch 7, **dadurch gekennzeichnet, dass** der Transistor (T2) vom Typ NPN-Transistor ist.

9. Toaster nach Anspruch 7 oder 8, **dadurch gekennzeichnet, dass** der Wert des Widerstands (R1) so berechnet ist, dass am Ende des Röstvorgangs eine Spannung U_{L} von -1,2 V erhalten wird.

10. Toaster nach einem der Ansprüche 1 bis 9, **dadurch gekennzeichnet, dass** die Unterbrechungsmittel (I1, I2) des Speisestromkreises der Spule durch Feldeffekttransistoren realisiert sind, deren Tore (24, 25) mit den Steuermitteln verbunden sind.

## Claims

1. A toaster comprising a housing (1) containing heater means (3), a toast-carrier carriage (4) movable between an ejection position towards which it is urged by resilient means (5), and a toasting position in which it is retained by an electromagnetic device (14), said electromagnetic device comprising firstly a ferromagnetic part (15) secured to the toast-carrier carriage (4), and secondly an electromagnet (16) secured to the housing, together with control means acting on the power supply circuit of the coil (17) of said electromagnet, the toaster being **characterized in that** the control means are adapted to act on interrupter means (I1, I2) of the power supply circuit of the coil (17) in such a manner as to apply a positive voltage (U_{L} to the terminals of the coil during the toasting operation, and then a negative voltage of smaller absolute value at the end of the toasting operation.

2. A toaster according to claim 1, **characterized in that** the power supply circuit of the coil (17) comprises first interrupter means (I1) disposed between a DC power supply terminal (20) and the input (21) of the coil (L), second interrupter means (12) between the input (21) of the coil and ground (23), a first resistor (R1) between the DC power supply terminal (20) and the output (22) of the coil, and a second resistor (R2) between the output (22) of the coil and ground (23), while the control means are adapted to hold the first interrupter means (I1) ON and the second interrupter means (I2) OFF during the toasting operation, and then to switch the first interrupter means (I1) OFF and the second interrupter means (I2) ON at the end of the toasting operation.

3. A toaster according to claim 2, **characterized in that** the voltage U_{L} applied to the terminals of the coil (L) is about 12 V during the toasting operation, and then about -0.5 V at the end of the toasting operation.

4. A toaster according to claim 2 or claim 3, **characterized in that** the resistance of the first resistor (R1) is much greater than that of the second resistor (R2).

5. A toaster according to claim 1, **characterized in that** the power supply circuit of the coil (17) comprises first interrupter means (I1) between a DC power supply terminal (20) and the input (21) of the coil (L), second interrupter means (I2) between the input (21) of the coil and ground (23), a resistor (R1) between the DC power supply terminal (20) and the output (22) of the coil, and a diode (D2) allowing current to flow from the output (22) of the coil to ground (23), while the control means are adapted to hold the first interrupter means (I1) ON and the second interrupter means (I2) OFF during the toasting operation, and then to switch the first interrupter means (I1) OFF and the second interrupter means (I2) ON at the end of the toasting operation.

6. A toaster according to claim 5, **characterized in that** the diode (D2) has a forward voltage of 0.6 V.

7. A toaster according to claim 1, **characterized in that** the power supply circuit of the coil (17) comprises first interrupter means (I1) between a DC power supply terminal (20) and the input (21) of the coil (L), second interrupter means (I2) between the input (21) of the coil and ground (23), a resistor (R1) between the DC power supply terminal (20) and the output (22) of the coil, and a transistor (T2) having its collector (26) connected to the output (22) of the coil, its base (27) connected to the input (21) of the coil, and its emitter (28) connected to ground (23), while the control means are adapted to hold the first interrupter means (I1) ON and the second interrupter means (I2) OFF during the toasting operation, and then to switch the first interrupter means (I1) OFF and the second interrupter means (I2) ON at the end of the toasting operation.

8. A toaster according to claim 7, **characterized in that** the transistor (T2) is of the NPN type.

9. A toaster according to claim 7 or claim 8, **characterized in that** the resistance of the resistor (R1) is designed so as to obtain a voltage U_{L} of -1.2 V at the end of the toasting operation.

10. A toaster according to any one of claims 1 to 9, **characterized in that** the interrupter means (I1, I2) of the power supply circuit of the coil are implemented by field-effect transistors having their gates (24, 25) connected to the control means.
